# EUROPEAN PATENT SPECIFICATION

(11) **EP 2 628 333 B1**
(45) Date of publication and mention of the grant of the patent: **12.02.2020**
(21) Application number: 10858359.2
(22) Date of filing: 13.10.2010
(51) Int. Cl.: H04W 74/08, H04W 72/12, H04W 16/14

(54) **METHOD AND APPARATUS FOR ENABLING SCHEDULED TRANSMISSION**
VERFAHREN UND VORRICHTUNG ZUR AKTIVIERUNG VON GEPLANTEN ÜBERTRAGUNGEN
PROCÉDÉ ET APPAREIL D'ACTIVATION D'UNE TRANSMISSION PLANIFIÉE

(43) Date of publication of application: 21.08.2013
(73) Proprietor: Nokia Technologies Oy, 02610 Espoo (FI)
(72) Inventor: KNECKT, Jarkko, FI-02330 Espoo (FI); RINNE, Mika, FI-02320 Espoo (FI)
(74) Representative: Ruuskanen, Juha-Pekka
(86) International application number: PCT/IB2010/054635
(87) International publication number: WO 2012/049533

(56) References cited:
- US-A1- 2009 061 849
- US-A1- 2010 091 716
- US-A1- 2010 091 716
- US-A1- 2010 091 717
- US-A1- 2010 255 801
- AT&T ET AL: "IEEE 802.11 QoS MAC Enhancements Joint Proposal passage", IEEE 802.11 QOS MAC ENHANCEMENTS JOINT PROPOSAL, XX, XX, 1 May 2000 (2000-05-01), pages 1-50, XP002209850,
- BAI Y. ET AL: 'Enhanced Protection Mechanism for Improving Co-Existence of IEEE 802.11 b and IEEE 802.11 g Wireless LANs' VEHICULAR TECHNOLOGY CONFERENCE, 2009. VTC SPRING 2009. IEEE 69TH 26 April 2009 - 29 April 2009, pages 1 - 5, XP031474483
- ABDULLAH A.A. ET AL: 'Enhanced Busy-Tone-Assisted MAC Protocol for Wireless Ad Hoc Networks' VEHICULAR TECHNOLOGY CONFERENCE FALL (VTC 2010-FALL), 2010 IEEE 72ND 06 September 2010 - 09 September 2010, pages 1 - 5, XP031770445

## Description

### TECHNICAL FIELD

The present application relates generally to method and apparatus for enabling scheduled transmission.

### BACKGROUND

Communications systems can be classified into at least two categories based upon technique used to gain access to resources of a wireless channel: (1) contention based systems and (2) scheduled systems.

In contention based systems, devices obtain transmission opportunity (TXOP) by sending competing requests for channel resources. This may be implemented by allowing a device to send a request to obtain TXOP, at a time of its choice or as calculated by an algorithm that randomizes transmission times. The device may send such a request only when it is sensed that the wireless channel is not being used by other devices. Typically, multiple devices will send competing requests and TXOP may be granted to a device whose request was first to be received uncorrupted. An example of contention based communications system is a wireless local area network (WLAN) according to the IEEE 802.11 family of standards. The IEEE 802.11 family of standards uses carrier sense multiple access protocol with collision avoidance (CSMA/CA) protocol to enable contention based access.

In scheduled systems, specific channel resources are allocated for requesting TXOP. Devices that are granted TXOP are indicated via a message sent by a network management entity, such as an access point (AP). The message may also indicate specific resources for use by the devices. Such a message may be called a schedule grant message. Schedule grant message is delivered to a device that has earned a TXOP to ensure good operation of the network. If the schedule grant message is lost, the device has no means to know of the allocated resources and thereby these resources are wasted. Additionally, scheduled systems may operate in licensed frequency bands to reduce interference. Examples of scheduled systems include most cellular systems including those based upon 3GPP Long Term Evolution (LTE) specifications.

For the purpose of allocating channel resources, a wireless channel may be structured into radio resources along multiple dimensions. Few examples of these dimensions may be time, frequency and code. A TXOP may span one or more dimensions.

US2009/061849 describes a wireless communications device in a first network with contention-based access that sends a special frame to one or more other devices in the first network, informing them that it will not be available to receive any transmissions during a specific time period. The frame may also specify a delay period, indicating when the period of unavailability will start.

US2010/0091716 describes a method for quieting multiple channels; a primary system consisting of a plurality of nodes and an access point. It also describes a secondary system consisting of a central controller and node utilizing a TDMA-based system protocol.

### SUMMARY

Various aspects of examples of the invention are set out in the claims.

According to a first aspect of the present invention, an apparatus comprises a processor configured to determine whether a scheduled transmission is to be initiated in a frequency band in which at least one device uses contention based communication; a transmitter configured to transmit a reservation message to release a resource from the contention based communication, wherein the transmitting of the reservation message causes interference to the at least one device at a level higher than a contention threshold of the at least one device; and a transmitter configured to transmit the scheduled transmission subsequent to transmitting the reservation message within a time interval shorter than a backoff time of the contention based communication.

According to a second aspect of the present invention, a method of wireless communication comprises determining that a scheduled transmission is to be initiated in a frequency band in which at least one device uses contention based communication and transmitting a reservation message to release a resource from the contention based communication, wherein the transmitting of the reservation message causes interference to the at least one device at a level higher than a contention threshold of the at least one device; and transmitting the scheduled transmission subsequent to transmitting the reservation message within a time interval shorter than a backoff time of the contention based communication.

According to a third aspect of the present invention, an apparatus comprises a processor configured to: determine whether a scheduled transmission is to be initiated in a frequency band in which at least one device uses contention based communication ;a transmitter configured to transmit an instruction message to a device, instructing the device to transmit a reservation message in the frequency band, wherein the transmitting of the reservation message causes interference to the at least one device at a level higher than a contention threshold of the at least one device; and a transmitter configured to transmit the scheduled transmission subsequent to transmitting the reservation message within a time interval shorter than a backoff time of the contention based communication.

According to a fourth aspect of the present invention a method of wireless communication comprises determining that a scheduled communication is to be initiated in a frequency band in which at least one device uses contention based communication and instructing a device to transmit a reservation message in the frequency band, wherein the transmitting of the reservation message causes interference to the at least one device at a level higher than a contention threshold of the at least one device; and transmitting the scheduled transmission subsequent to transmitting the reservation message within a time interval shorter than a backoff time of the contention based communication.

According to a fifth aspect of the present invention, there is provided a computer-readable medium encoded with instructions that, when executed by a computer, perform a method of wireless communication comprising: determining that a scheduled transmission is to be initiated in a frequency band in which at least one device uses contention based communication; transmitting a reservation message in the frequency band, wherein the transmitting of the reservation message causes interference to the at least one device at a level higher than a contention threshold of the at least one device; and transmitting the scheduled transmission subsequent to transmitting the reservation message within a time interval shorter than a backoff time of the contention based communication.

Further embodiments of the invention are set forth in the dependent claims.

### BRIEF DESCRIPTION OF THE DRAWINGS

For a more complete understanding of example embodiments of the present invention, reference is now made to the following descriptions taken in connection with the accompanying drawings in which:
FIGURE 1 describes an example implementation of a contention based communication according to the CSMA/CA channel access;
FIGURE 2(a) shows simultaneous operation of a contention based system and a scheduled system in a license exempt band;
FIGURE 2(b) demonstrates interference experienced by a contention based system when a scheduled system and the contention based system operate simultaneously in the vicinity of each other and in overlapping frequencies;
FIGURE 3 shows operation according to an example embodiment of the invention wherein an apparatus in a scheduled system reserves contention based bandwidth in a license exempt band for a scheduled transmission;
FIGURE 4 shows an example embodiment of the invention wherein an apparatus in a scheduled system maintains its reservation of contention based bandwidth by either transmitting on the bandwidth or by instructing another device to transmit on the bandwidth;
FIGURE 5 is a flow diagram showing operations for scheduled transmission in a contention based bandwidth according to an example embodiment of the invention; and
FIGURE 6 shows an apparatus for effecting a scheduled transmission in a contention based bandwidth according to an example embodiment of the invention.

### DETAILED DESCRIPTON OF THE DRAWINGS

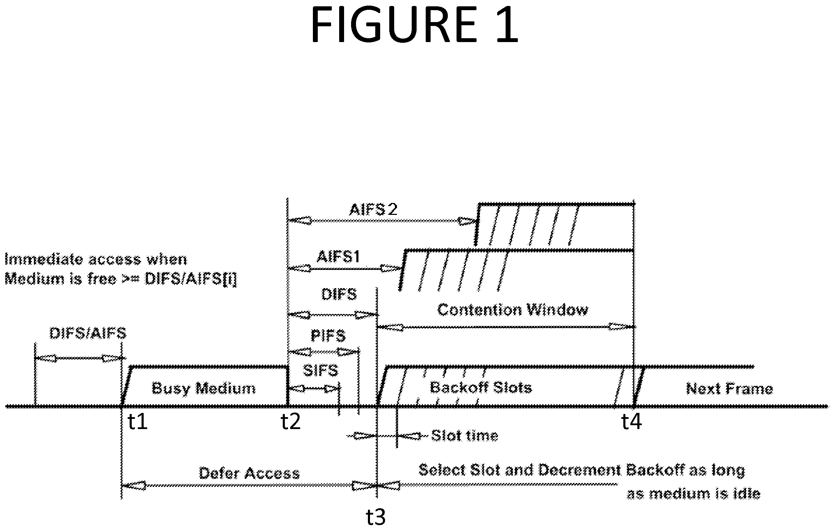

An example embodiment of the present invention and its potential advantages are understood by referring to FIGURES 1 through 6 of the drawings.

Contention based access to a wireless channel may be enabled by CSMA/CA (carrier sense multiple access protocol with collision avoidance) protocol that is designed to reduce collision probability between multiple devices or stations (STAs) accessing the wireless channel via use of a random backoff procedure. In an example embodiment, collision is defined as the event that multiple transmissions are received on a set of channel resource at a receiving station such that the transmissions cannot be distinguished from one another. In an example embodiment of the invention, collision is said to have occurred if multiple transmissions are received at a receiving station in the same set of resource at the same time. In an example embodiment, collision probability is defined as a probability that a collision occurs.

In accordance with the CSMA/CA principle, in order to send a request for TXOP, a STA first determines whether the wireless channel is busy or idle and transmits a request only if the channel is idle. In the IEEE 802.11 family of standards, the process of determining whether the channel is busy or idle is called clear channel assessment (CCA). As per CCA, in an example embodiment, a STA concludes that a channel is idle if signal energy received by the STA in the channel is below a certain threshold called a CCA power threshold. In general, such power threshold will be referred to as a contention threshold. At least two threshold values may be defined for this purpose: (1) For preamble transmissions, the threshold may be -85 dBm. In an example embodiment, preamble is meant to include all synchronization symbols contained within a transmitted message. It should be noted that this value is derived from the IEEE Std. 802.11 and real implementations may be much more sensitive, (2) In random signals or in signals from other systems, the CCA threshold may be -65dB, 20dBm greater than preamble sensitivity. The threshold may indicate the highest interference power level that a device may experience, and still decide to initiate a transmission.

It should be noted that value of contention threshold may vary between systems and with time within a system. Contention threshold may be calculated based upon a wide range of parameters including but not limited to received signal strength, interference, thermal noise, and/or the like. In accordance with embodiments of the invention, contention threshold can be set at any suitable value without departing from the teachings of embodiments of the invention.

Collision probability in contention based systems is especially high just after the wireless channel, also called the medium, becomes idle following a busy period. This is because multiple STAs could have been waiting for the medium to become available again. A random backoff procedure may be used to resolve such medium contention conflicts. According to the random backoff procedure, if the wireless medium is sensed idle, a randomly generated wait period called random backoff is determined by a STA. The STA waits for the random backoff period to elapse before transmitting.

Backoff calculation in IEEE 802.11 family of standards operates with an arbitrary interframe space (AIFS), a minimum length of contention window (CWMin) and a maximum length of contention window (CWMax) parameters. A plurality of interframe spaces are defined in IEEE 802.11 family of standards such as short interframe space (SIFS), distributed coordination function interframe space (DIFS), point coordination function interframe space (PIFS) and AIFS. SIFS period is shortest and it is only applied between data and acknowledgement frames. The AIFS parameter defines a constant duration from last time the medium was busy. Several durations for the AIFS have been defined in the IEEE 802.11 family of standards. PIFS is the shortest AIFS value and its duration is equal to SIFS +1 slot where duration of a slot varies according to the standard. For example, IEEE Std. 802.11a and IEEE Std. 802.11n define a slot of 9µs. Similarly DIFS duration is SIFS +2 slots. AIFS parameter typically creates prioritization between frames with shorter AIFS resulting in higher priority.

IEEE 802.11 family of standards defines backoff value as the number of slots that a device should wait after sensing an idle channel, before it may transmit a frame. Backoff value is calculated as a random number between 1 and the value of CW. The value of CW may range from CWmin to CWmax. If previous transmission was successful, CW value is set to CWmin. If the previous transmission was unsuccessful, the CW value is doubled or set to CWMax, whichever is smaller.

Once backoff value is computed, it is reduced by one every slot duration when the channel is idle. It should be noted that the channel should be idle in order for a STA to reduce backoff value and obtain TXOP. If the wireless channel is busy, no transmissions are performed.

FIGURE 1 describes an example implementation of a contention based communication according to the CSMA/CA channel access. If the wireless channel is sensed to be idle for a duration longer than SIFS, a STA gets immediate access to the channel and is allowed to transmit. However, if the channel is determined to be busy as is the case at time t1, the STA defers access but keeps monitoring the channel. The STA waits till time t2 when the channel becomes idle and applies the appropriate interframe space such as DIFS, PIFS, SIFS or any other AIFS such as AIFS1 and AIFS2. Assuming that the appropriate interframe spacing is DIFS, the STA defers access to the wireless channel till time t3 which is a time period equal to DIFS starting at time t2. The STA then computes its random backoff interval. The random backoff interval in FIGURE 1 is shown to be equal to (t4-t3). Starting at time t3, the STA begins the countdown of backoff interval. Since the channel is idle between times t3 and t4, the STA is able to successfully reduce its backoff value by one for each time slot between t3 and t4. At time t4, the backoff interval expires and the STA is allowed to transmit.

Contention based systems employing CSMA/CA protocol may operate in a license exempt frequency band. Since a license exempt frequency band is open for use by all systems, a scheduled system such as a Long Term Evolution-Advanced (LTE-A) system that is designed to operate in licensed frequency bands may use this license exempt band if it wishes to use more bandwidth than is available in the licensed bands. Such a situation may arise when the licensed bands do not have enough capacity to support all LTE-A traffic. In such situations, contention based systems such as those defined by the IEEE 802.11 family of standards may be forced to coexist with scheduled systems in a frequency band.

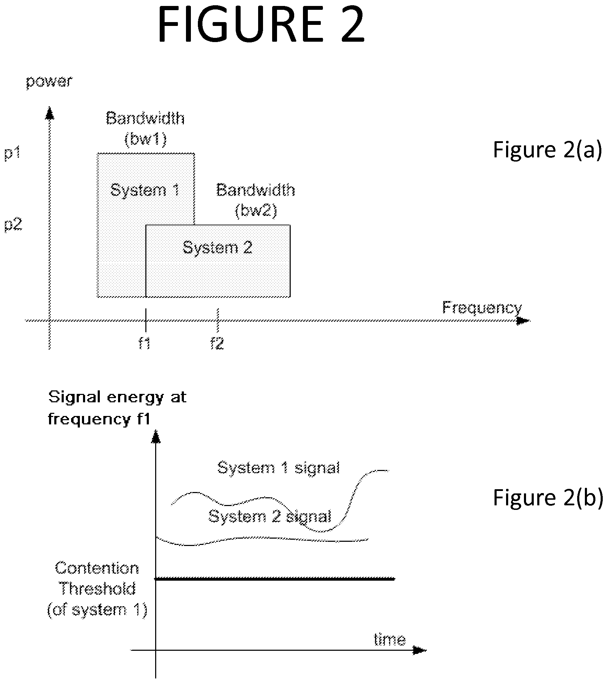

FIGURE 2(a) shows simultaneous operation of a contention based system and a scheduled system in a license exempt band. Shown in FIGURE 2(a) is System 1 that uses contention-based transmissions and operates at center frequency f1, with bandwidth equal to bw1 and maximum transmission power equal to p1. System 1 may use CSMA/CA mechanism as shown in FIGURE 1 to implement contention based access to a wireless channel. Also shown in the FIGURE 2(a) is System 2 that uses scheduled transmissions and operates at center frequency f2, with bandwidth equal to bw2 and maximum transmission power equal to p2. Since the operating frequencies of the two systems may overlap, there may be interference between the two systems. The amount of interference experienced by System 1 due to transmissions from System 2 depends upon the physical distance and propagation isolation between the two systems.

FIGURE 2(b) demonstrates interference experienced by System 1 when System 1 and System 2 operate simultaneously in the vicinity of each other and in overlapping frequencies. Due to proximity of the two systems, transmissions from System 2 are received at System 1 with power that is comparable to transmissions of System 1 itself. Hence, even when there are no ongoing transmissions in System 1, a System 1 device may sense the channel to be busy if interference from System 2 is higher than the contention threshold of System 1. In such a situation, in accordance with the CSMA/CA principle, a System 1 device may not transmit any messages till the power of System 2 signal drops below the contention threshold and system 1 experiences idle channel.

It should be noted that scheduled transmissions will not affect operations of a contention based system if the two systems operate in non-overlapping frequency bands or if the two systems are physically isolated such that interference experienced by the contention based system from scheduled transmissions is less than the contention threshold.

According to an example embodiment of the invention, a device that is not part of a contention based communication system but wishes to use bandwidth of the contention based system may do so by transmitting a signal for a duration that is at least as long as a longest expected duration of a transmission by a STA in the contention based system. This signal may be called a reservation signal, a tone or a reservation message. The reservation signal will cause ongoing data transmissions in the contention based system to failure due to collision. The reservation signal will also make the channel appear busy to all STAs in the contention based system that experience the received reservation signal at a power level that is higher than the contention threshold. As a result, these contention based STAs will stop transmitting. Also, the contention based STAs will not start new transmissions due to experiencing a busy channel. The device that is not part of the contention based communication system may then start its own transmission after cessation of the reservation signal but within a time interval that is shorter than a smallest backoff time of the contention based STAs. Hence, using a reservation signal, a device in a scheduled system may capture bandwidth used by contention based system and maintain it for scheduled system transmissions.

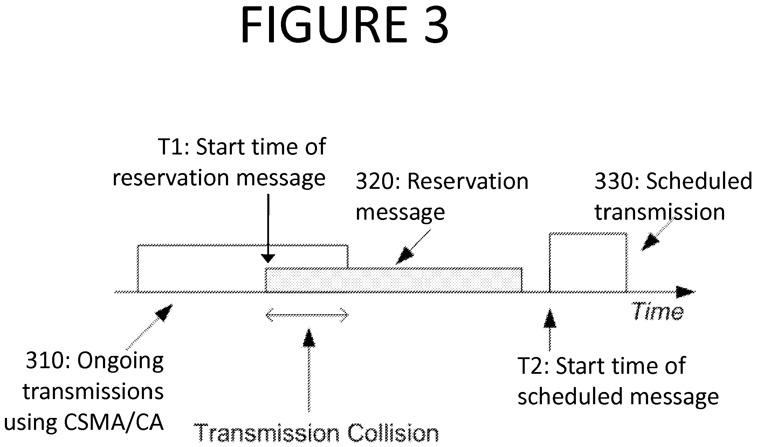

FIGURE 3 shows operation according to an example embodiment of the invention wherein an apparatus in a scheduled system reserves contention based bandwidth in a license exempt band for a scheduled transmission. The scheduled system may be System 2 of FIGURE 2(a) or an LTE-A system. The apparatus may monitor existence of contention based devices in a license exempt band. The contention based devices may be WLAN devices or may be part of System 1 of FIGURE 2(a). If transmissions 310 caused by contention based devices using CSMA/CA channel access are detected by the apparatus, it starts to transmit a reservation message 320 at time instant T1. This reservation message may collide with transmissions from the contention based devices and force transmissions from the contention based devices to failure.

Transmitting of the reservation message causes interference to contention based devices at a level that is higher than their contention threshold. This causes devices using contention based communication to sense the channel as busy. Based upon the CSMA/CA principle these devices will not attempt further transmissions till the channel is idle. Furthermore, these devices will calculate their individual backoff values. If the apparatus maintains continuous transmission of the reservation message or any other continuous transmission, the contention based devices will continue to sense a busy medium, will generate increasingly longer backoff intervals and will not attempt transmission.

It should be noted that if duration of the reservation message is at least as long as duration of a longest message transmitted by contention based devices, the wireless channel will be free of interference from transmissions of the contention based system when the reservation message ends. For example, if duration of longest message transmitted by contention based devices is 1.5 ms, then the apparatus may transmit reservation message for 2-3 ms. Furthermore, if the contention based system is a WLAN system compliant with IEEE 802.11 standard, contention based devices will wait for at least PIFS duration after the apparatus stops transmitting reservation messages, before attempting transmission.

Finally, transmission 330 of the scheduled message begins at time T2. T2 preferably occurs less than shortest backoff time interval after cessation of the reservation message and therefore devices in the contention based system which may have experienced a busy channel due to the reservation message will continue to experience a busy channel till start of the scheduled message. Scheduled transmission 330 may be a downlink transmission, an uplink transmission, or a device-to-device communication signal such as in an ad hoc network of devices.

The reservation message may be a pure signal waveform, a non-modulated tone, a modulated tone, a system specific chirp-like sequence, a Zadoff-Chu-sequence, a Cazac-sequence or alike. It may also be a signal with a predetermined power level, bandwidth or power spectral density. Further, the reservation signal may follow spectral emission requirements of a system operating in the frequency band. The reservation signal may also comprise coded information. The code may be a channel code, for example, a convolutional code, a block code or a Reed-Mueller code. The reservation signal may comprise a preamble and an information part.

The reservation signal may further comprise digital information that in addition to reserving the channel delivers information for a receiver. The digital information in the reservation signal may be an identity of a transmission system that is attempting reservation such as some known system identity, identity of a transmission system type that is attempting reservation or identity of a spectral coexistence method such as a coexistence method identity or a regulatory identity.

The reservation signal may be pilot tones, or a flexible spectrum usage (FSU) message. The FSU message used as a reservation signal may describe size of allocated spectrum and an identity of the reserving device. The apparatus may use maximum transmission power while it transmits the reservation signal.

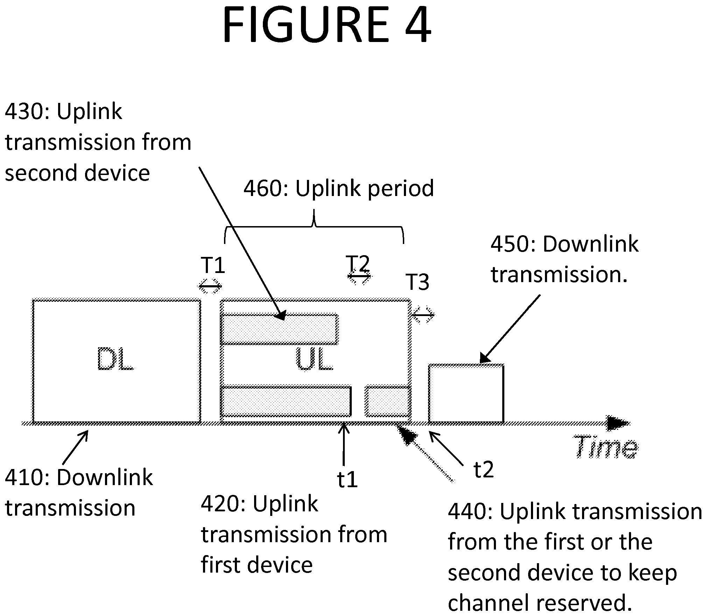

FIGURE 4 shows an example embodiment of the invention wherein an apparatus in a scheduled system maintains its reservation of contention based bandwidth by either transmitting on the bandwidth or by instructing another device to transmit on the bandwidth. Such a situation may arise if the apparatus wishes to keep a contention based bandwidth reserved but is not able to transmit a reservation message itself. A reservation signal sent by the instructed device may be similar to a reservation message sent by the apparatus or it may be a modified schedule grant message or a dedicated management frame.

In FIGURE 4, 410 depicts downlink transmission, e.g., transmission by the apparatus to other devices in the scheduled system. The apparatus may belong to a scheduled system, such as System 2 of FIGURE 2. The apparatus may be an AP. The apparatus may also transmit a schedule grant message to inform other devices in the scheduled system of channel resources granted to them for uplink transmissions. Uplink transmissions may start within time period T1 after end of downlink transmission wherein, in an example embodiment, T1 is less than the smallest duration that a device using contention will put its transmissions on hold after sensing idle channel. Such a value of T1 ensures that devices belonging to contention based system will not attempt transmission and the channel will remain available for scheduled uplink transmission.

As shown in FIGURE 4, a first and a second device start their uplink transmissions, 420 and 430, in accordance with channel resources granted to them in the schedule grant message. As shown in FIGURE 4, the longer of the two uplink transmissions ends at time instant t1 and the next downlink transmission is not scheduled to start till time instant t2. If there is no reservation message transmitted between time instants t1 and t2, contention based devices may attempt transmission and hence the channel might become unavailable for use by downlink transmission 450 scheduled to start at time instant t2. If the apparatus is unable to transmit a reservation message itself, it may instruct either the first device or the second device to do so. The instructed device may start transmission of a reservation message within time period T2 after the end of the uplink transmission. In an example embodiment, T2 is less than the smallest duration that a device using contention will wait after sensing idle channel and before transmitting. The instructed device may continue to transmit the reservation signal up to a time period T3 before start of the next scheduled transmission. In an example embodiment, T3 is less than the smallest duration that a device using contention will wait after sensing idle channel and before transmitting. It should be noted that time intervals T1, T2 and T3 may be predetermined and may be configurable. Values of T1, T2, T3 may be determined based on a known standard, such as IEEE Std. 802.11 or a WiFi Alliance specification, that defines systems operating via contention based principles in an unlicensed frequency band.

Embodiments of the invention described in FIGURES 3 and 4 and accompanying text enable coexistence of contention based systems and scheduled systems in a frequency spectrum. In accordance with the above described embodiments, one or more scheduled systems can coexist with a contention based system in an unlicensed spectrum. In accordance with another example embodiment of the invention, a coexistence rule may be employed among the one or more systems that may transmit a reservation signal in the contention based frequency band. Such coexistence principles may be agreed apriori, for example, in compliance with a technology standard such as IEEE Std. 802.11, a WiFi alliance specification and IEEE 802.19. If several such principles are defined, a spectrum coexistence rule to be applied may be identified. The reservation message may include an identifier of such a coexistence scheme. This identifier may refer to a mechanism specified in a coexistence standard.

Coexistence rule in use on a given frequency band may be identified via alternative transmission systems operating in that geographical area, using broadcast signals, a database, or by a reservation message. In an example embodiment of the invention, a spectral coexistence rule may define power emission limitations. In another example embodiment of the invention, a spectral coexistence rule may use carrier sensing principle of the IEEE 802.11 standard or it may specify a Medium Access Control (MAC) scheduled coexistence rule. In another example embodiment of the invention, a spectral coexistence rule may specify a reservation mechanism.

In an example embodiment of the invention, a coexistence rule may grant transmission authorization to a radio system. The transmission authorization may grant permission to the radio system to operate at a resource. The resource may be a licensed or a license exempt band. In another example embodiment of the invention, a coexistence rule may specify a transmission authority or it may specify transmission priority among plurality of systems transmitting a reservation signal. An authorized system may have a highest priority for transmission in the resource and may consider itself a primary system of the resource. In another example embodiment of the invention, a transmission priority may be used to prioritize access of authorized radio systems to a resource. A transmission priority may set the rules for access to the resource among authorized systems. In another example embodiment of the invention, transmission authorization may be based upon a spectrum regulation or a written specification of spectral access.

In another example embodiment of the invention, an apparatus may instruct multiple devices to use uplink transmissions to keep a contention based channel occupied. The apparatus may instruct one or more bits in a downlink frame to identify devices that will transmit a reservation message to keep the channel occupied. The apparatus may indicate in a schedule grant message which devices may transmit a reservation signal. The indicated devices may transmit a reservation message at the same transmission power as used for other transmissions. The apparatus may instruct multiple devices to ensure that enough power is transmitted in the contention based channel to maintain the channel busy for the CSMA/CA devices. The instructed devices may transmit for a whole uplink period, such as uplink period 460 of FIGURE 2, even if they do not have any traffic to transmit. The apparatus may select devices that are couplable to a power outlet, solar powered or have enough battery power to last for a predetermined time. The predetermined time may be duration of an uplink subframe or it may be a much longer duration extending up to several hours.

It should be noted that forcing a part of a contention based bandwidth to be busy may not have a long term detrimental effect on the contention based system. This is because the contention based system may find another frequency band that is not occupied by a scheduled system and start operating in the new band.

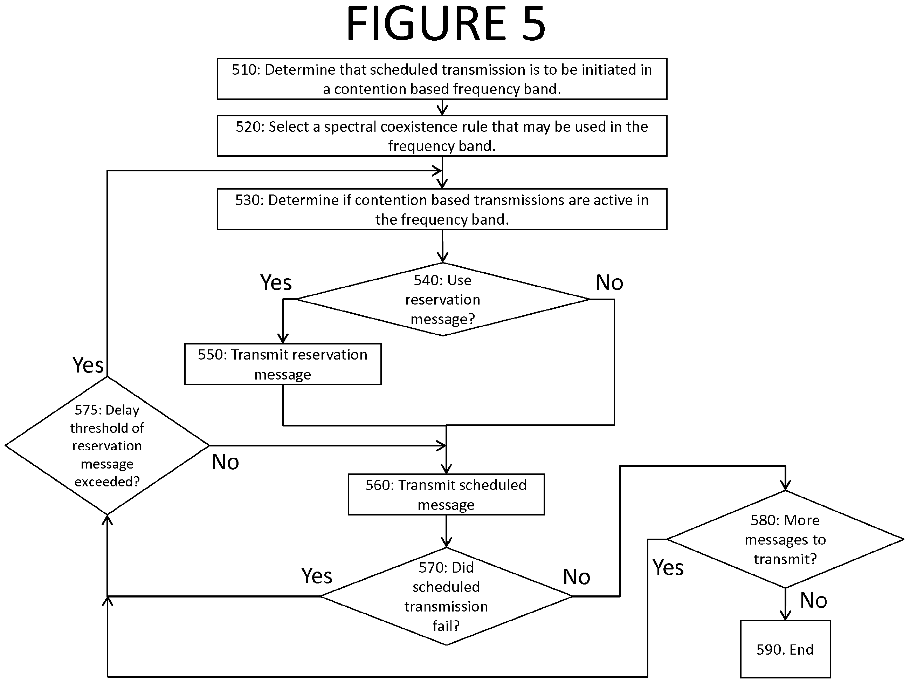

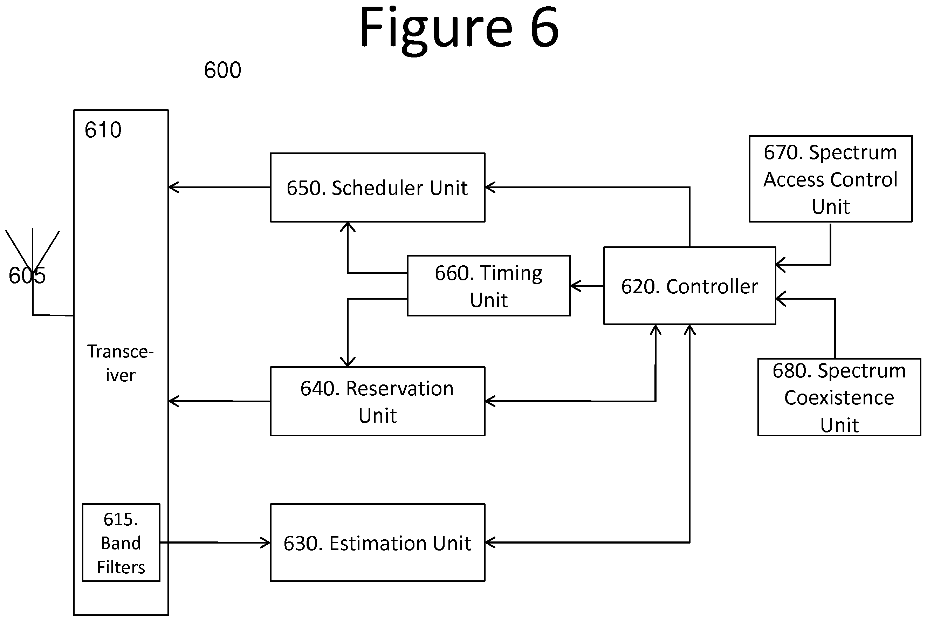

FIGURE 5 is a flow diagram showing operations for scheduled transmission in contention based bandwidth according to an example embodiment of the invention. The method may be executed by an apparatus, such as apparatus 600 of FIGURE 6.

At block 510, it is determined that a scheduled transmission is to be initiated in a contention based frequency band. The determination may be made in an apparatus that may be an AP or a non-AP apparatus in a scheduled system. The scheduled system may be System 2 of FIGURE 2.

At block 520, a spectral coexistence rule that may be used in the frequency band is selected.

At block 530, it is determined if contention based transmissions are active in the contention based frequency band.

In an example embodiment of the invention an apparatus may choose to first determine if contention based transmissions are active in the contention based frequency band by estimating power of ongoing transmissions in the spectrum and then decide on its course of action based on that knowledge. In another example embodiment of the invention, an apparatus may decide not to initiate scheduled transmissions in the contention based frequency band if contention based transmissions are active in the frequency band.

In another example embodiment of the invention an apparatus may choose not to make this determination and may decide on its course of action based upon a knowledge that a contention-based system may operate in the spectrum.

At block 540, it is decided whether to transmit a reservation message or not. If it is decided to transmit a reservation message, then at block 550 a reservation message is transmitted. In an example embodiment of the invention, an apparatus may instruct another device, such as the first device or the second device of FIGURE 4, to transmit a reservation message. The another device may be selected based upon a type of power source it uses. The another device may be selected if it is couplable to a power outlet, solar powered or has enough battery power to last for a predetermined time. The predetermined time may be duration of an uplink subframe.

At block 560, the scheduled transmission is initiated. The scheduled transmission may be initiated within a predetermined time interval after cessation of the reservation message. The predetermined time interval may be a shortest time duration for which a contention based device waits after sensing an idle channel and before transmitting.

At block 570, it is determined whether the scheduled transmission was successful or not. If it is determined that it was unsuccessful, control passes to block 575 where it is determined whether delay threshold of a reservation message has exceeded or not. In an example embodiment of the invention, a delay threshold of a reservation message may be a time period following transmission of a message within which contention based devices may not attempt access to the resource. For example, a delay threshold of a reservation message may be shorter than a smallest backoff time of a contention based STA. If at block 575, it is determined that delay threshold has not been exceeded, control passes to block 560 and the scheduled message is retransmitted. However, if at block 575 it is determined that delay threshold has been exceeded, control passes to block 530 and it is determined whether contention based transmissions are active in the frequency band or not.

If at block 570 it is determined that the scheduled transmission was successful, control passes to block 580 and it is determined whether more messages are to be transmitted or not. If there are no more messages to transmit, at block 590 the process ends. If the apparatus has more messages to transmit, then control passes to block 575 where it is determined whether delay threshold of a reservation message has exceeded or not. If it is determined that delay threshold has not been exceeded, control passes to block 560 and another scheduled message is retransmitted. If it is determined that delay threshold has been exceeded, control passes to block 530 and it is determined whether contention based transmissions are active in the frequency band or not.

In an example embodiment of the invention, if a previously scheduled transmission was successful, the apparatus may decide to transmit a next scheduled transmission without first transmitting a reservation message.

In an example embodiment of the invention, the scheduled message may be a signaling message, data from an application or a protocol data unit such as a medium access protocol packet data unit.

In another example embodiment of the invention, an apparatus of a scheduled system may estimate interference level in a spectrum and based upon this estimate, select a candidate frequency channel and bandwidth to transmit a reservation message.

In another example embodiment of the invention, an AP of a scheduled system may estimate an interference level in a portion of a spectrum, and based upon the estimate decide to transmit a reservation message, start scheduled transmission without first transmitting a reservation message, or may decide not to initiate any transmission in the proportion of the spectrum.

In another example embodiment of the invention, an apparatus of a scheduled system may, after receiving a signal of the contention-based system, such as a beacon signal, decide whether to transmit a reservation message or not.

FIGURE 6 shows an apparatus 600 for causing a scheduled transmission in a contention based bandwidth according to an example embodiment of the invention. The apparatus may be an AP device, a non-AP device, a mobile device, a mobile device configured to operate as an AP, or a device operating in a device-to-device communication mode. The apparatus may be part of a scheduled system such as System 2 of FIGURE 2.

Apparatus 600 comprises an antenna unit 605 that may be used to transmit and receive wireless signals. The antenna unit 605 is coupled to a transceiver 610. The transceiver 610 may comprise band filters 615 for extracting signals in a predetermined frequency band from signals received by the antenna unit 605. The predetermined frequency band of the band filters may be configurable. The band filters may be coupled to an estimation unit 630. The apparatus may further comprise a controller 620 that may be coupled to the estimation unit 630, a reservation unit 640 and a scheduler unit 650. The controller may be further coupled to a timing unit 660 that provides timing information to the reservation unit 640 and the scheduler unit 650. The controller may also be coupled to a spectrum access control unit 670 and a spectrum coexistence unit 680. The reservation unit 640 and the scheduler unit 650 may be coupled to the transceiver 610.

The controller 620, in response to a determination that a scheduled transmission is to be initiated in a contention based frequency band, may either determine whether contention based transmissions are active in the frequency band or the controller may assume that contention based transmissions are active in the frequency band. If the controller chooses to determine whether contention based transmissions are active in the frequency band, it may instruct the estimation unit 630 to estimate power of ongoing transmissions in the frequency band. The estimation unit 630 may use wireless signals received by antenna 605 and filtered by the band filters 615 to estimate power of ongoing transmissions in the frequency band. The band filters may allow only signals in the contention based frequency band to pass through to the estimation unit 630 and may filter out the remainder of the signals received from the antenna unit 605.

The estimation unit may either provide this estimate to the controller 620 or it may compare the estimate to a threshold, such as a contention threshold, to decide whether transmissions are active in the contention based frequency band and then provide this decision to the controller 620. If instead the estimation unit 630 provides the estimate to the controller 620, the controller may compare the estimate to a predetermined threshold, such as a contention threshold, to determine whether transmissions are ongoing in the frequency band or not.

The controller may further instruct the reservation unit 640 to transmit a reservation signal. The reservation unit may transmit a reservation signal via the transceiver 610.

The controller may receive information on spectrum coexistence rule to be applied from the spectrum coexistence unit 680. The spectrum coexistence rule may be agreed apriori, for example, in compliance with a technology standard such as IEEE Std. 802.11, a WiFi alliance specification and IEEE 802.19. The controller may also receive information from the spectrum access control unit 670 on whether scheduled transmissions should be initiated in the contention based frequency band. The spectrum access control unit may base its decision on whether transmissions are ongoing in the contention based frequency band or not.

The controller may further instruct the scheduler unit 650 to transmit a scheduled message once the contention based bandwidth has been reserved using a reservation message. The scheduler unit may transmit a scheduled message via the transceiver 610 and antenna 605.

The controller may be further coupled to a timing unit 660 to control timing operations of the reservation unit and the scheduler unit.

Without in any way limiting the scope, interpretation, or application of the claims appearing below, a technical effect of one or more of the example embodiments disclosed herein is enabling scheduled transmission. Another technical effect of one or more of the example embodiments disclosed herein is enabling scheduled transmission in a contention based frequency band. Another technical effect of one or more of the example embodiments disclosed herein is coexistence of a scheduled system and a contention based system in a license exempt frequency band.

Embodiments of the present invention may be implemented in software, hardware, application logic or a combination of software, hardware and application logic. The software, application logic and/or hardware may reside on an access point, a mobile device such as a smart phone, a communicator, a laptop computer, a tablet computer, an electronic pad, a phone, or any device configured to operate in a scheduled system. If desired, part of the software, application logic and/or hardware may reside on a reservation unit, part of the software, application logic and/or hardware may reside on a scheduler unit, part of the software, application logic and/or hardware may reside on a estimation unit and part of the software, application logic and/or hardware may reside on a controller. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in FIGURE 6. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method of wireless communication comprising:
determining that a scheduled transmission (330) is to be initiated in a frequency band in which at least one device uses contention based communication;
transmitting a reservation message (320) to release a resource from the contention based communication, wherein the transmitting of the reservation message (320) causes interference to the at least one device at a level higher than a contention threshold of the at least one device; and
transmitting the scheduled transmission (330) subsequent to transmitting the reservation message (320) within a time interval shorter than a backoff time of the contention based communication.

2. The method of claim 1, wherein the reservation message (320) is transmitted for a duration that is at least as long as a longest expected transmission duration of a packet in the contention based communication.

3. The method of claim 1, wherein the reservation message (320) is transmitted at highest transmission power.

4. The method of claim 1, wherein the reservation message (320) comprises an identifier of a device transmitting the reservation message (320).

5. The method of claim 1, wherein the reservation message (320) comprises an identifier of a transmission system.

6. The method of claim 1, wherein the reservation message (320) comprises an identifier of a spectral coexistence rule.

7. The method of claim 1, wherein the reservation message (320) prevents a device using the contention based communication from transmitting.

8. The method of claim 1, wherein the reservation message (320) is transmitted only if there is no ongoing transmission by a device using the contention based communication.

9. A method of wireless communication comprising:
determining that a scheduled communication (330) is to be initiated in a frequency band in which at least one device uses contention based communication;
instructing a device to transmit a reservation message (320), wherein the transmitting of the reservation message (320) causes interference to the at least one device at a level higher than a contention threshold of the at least one device; and
transmitting the scheduled transmission (330) subsequent to transmitting the reservation message (320) within a time interval shorter than a backoff time of the contention based communication.

10. The method of claim 9, wherein the instruction includes information on duration of the reservation message (320).

11. The method of claim 9, wherein the instruction comprises information on a frequency band on which the reservation message (320) is to be transmitted.

12. The method of claim 9, wherein the instruction comprises information on a geographical region where the reservation message (320) is to be transmitted.

13. The method of claim 9, wherein the device is instructed only if the device has enough battery power to last for a predetermined time.

14. An apparatus, comprising:
means for implementing the steps in any one of method claims 1 to 13.

15. A computer-readable medium encoded with instructions that, when executed by a computer, performs a method of wireless communication comprising:
determining that a scheduled transmission (330) is to be initiated in a frequency band in which at least one device uses contention based communication;
instructing a device to transmit a reservation message (320) in the frequency band, wherein the transmitting of the reservation message (320) causes interference to the at least one device at a level higher than a contention threshold of the at least one device; and
transmitting the scheduled transmission (330) subsequent to transmitting the reservation message (320) within a time interval shorter than a backoff time of the contention based communication.

## Patentansprüche

1. Verfahren zur drahtlosen Kommunikation, umfassend:
Bestimmen, ob eine geplante Übertragung (330) in einem Frequenzband eingeleitet werden soll, in dem mindestens eine Vorrichtung konkurrenzbasierte Kommunikation verwendet;
Übertragen einer Reservierungsnachricht (320), um eine Ressource aus der konkurrenzbasierten Kommunikation freizugeben, wobei das Übertragen der Reservierungsnachricht (320) eine Störung der mindestens einen Vorrichtung auf einem Niveau verursacht, das höher als eine Konkurrenzschwelle der mindestens einen Vorrichtung ist; und
Übertragen der geplanten Übertragung (330) nach dem Übertragen der Reservierungsnachricht (320) innerhalb eines Zeitintervalls, das kürzer als eine Wartezeit der konkurrenzbasierten Kommunikation ist.

2. Verfahren nach Anspruch 1, wobei die Reservierungsnachricht (320) für eine Dauer übertragen wird, die mindestens so lang wie eine längste erwartete Übertragungsdauer eines Pakets in der konkurrenzbasierten Kommunikation ist.

3. Verfahren nach Anspruch 1, wobei die Reservierungsnachricht (320) mit der höchsten Sendeleistung übertragen wird.

4. Verfahren nach Anspruch 1, wobei die Reservierungsnachricht (320) einen Identifikator einer Vorrichtung umfasst, die die Reservierungsnachricht (320) überträgt.

5. Verfahren nach Anspruch 1, wobei die Reservierungsnachricht (320) einen Identifikator eines Sendesystems umfasst.

6. Verfahren nach Anspruch 1, wobei die Reservierungsnachricht (320) einen Identifikator einer spektralen Koexistenzregel umfasst.

7. Verfahren nach Anspruch 1, wobei die Reservierungsnachricht (320) eine Vorrichtung, die die konkurrenzbasierte Kommunikation verwendet, an der Übertragung hindert.

8. Verfahren nach Anspruch 1, wobei die Reservierungsnachricht (320) nur dann übertragen wird, wenn keine laufende Übertragung durch eine Vorrichtung erfolgt, die konkurrenzbasierte Kommunikation verwendet.

9. Verfahren zur drahtlosen Kommunikation, umfassend:
Bestimmen, ob eine geplante Kommunikation (330) in einem Frequenzband eingeleitet werden soll, in dem mindestens eine Vorrichtung konkurrenzbasierte Kommunikation verwendet;
Anweisen einer Vorrichtung, eine Reservierungsnachricht (320) zu übertragen, wobei das Übertragen der Reservierungsnachricht (320) eine Störung der mindestens einen Vorrichtung auf einem Niveau verursacht, das höher als eine Konkurrenzschwelle der mindestens einen Vorrichtung ist; und
Übertragen der geplanten Übertragung (330) nach dem Übertragen der Reservierungsnachricht (320) innerhalb eines Zeitintervalls, das kürzer als eine Wartezeit der konkurrenzbasierten Kommunikation ist.

10. Verfahren nach Anspruch 9, wobei die Anweisung Informationen über die Dauer der Reservierungsnachricht (320) enthält.

11. Verfahren nach Anspruch 9, wobei die Anweisung Informationen über ein Frequenzband umfasst, in dem die Reservierungsnachricht (320) zu übertragen ist.

12. Verfahren nach Anspruch 9, wobei die Anweisung Informationen über einen geografischen Bereich umfasst, in dem die Reservierungsnachricht (320) zu übertragen ist.

13. Verfahren nach Anspruch 9, wobei die Vorrichtung nur dann angewiesen wird, wenn die Vorrichtung genügend Batterieleistung für eine vorbestimmte Zeit aufweist.

14. Vorrichtung, umfassend:
Mittel zum Durchführen der Schritte in einem beliebigen der Verfahrensansprüche 1 bis 13.

15. Computerlesbares Medium, das mit Anweisungen kodiert ist, die beim Ausführen durch einen Computer ein Verfahren zur drahtlosen Kommunikation durchführen, umfassend:
Bestimmen, ob eine geplante Übertragung (330) in einem Frequenzband eingeleitet werden soll, in dem mindestens eine Vorrichtung konkurrenzbasierte Kommunikation verwendet;
Anweisen einer Vorrichtung, eine Reservierungsnachricht (320) im Frequenzband zu übertragen, wobei das Übertragen der Reservierungsnachricht (320) eine Störung der mindestens einen Vorrichtung auf einem Niveau verursacht, das höher als eine Konkurrenzschwelle der mindestens einen Vorrichtung ist; und
Übertragen der geplanten Übertragung (330) nach dem Übertragen der Reservierungsnachricht (320) innerhalb eines Zeitintervalls, das kürzer als eine Wartezeit der konkurrenzbasierten Kommunikation ist.

## Revendications

1. Procédé pour une communication sans fil comprenant :
la détermination qu'une transmission planifiée (330) est destinée à être lancée dans une bande de fréquences dans laquelle au moins un dispositif utilise une communication à base de contention ;
la transmission d'un message de réservation (320) pour libérer une ressource au niveau de la communication à base de contention, la transmission du message de réservation (320) provoquant une interférence sur l'au moins un dispositif à un niveau plus élevé qu'un seuil de contention de l'au moins un dispositif ; et
la transmission de la transmission planifiée (330) à la suite de la transmission du message de réservation (320) au sein d'un intervalle de temps plus court qu'un temps d'espacement des tentatives (« backoff ») de la communication à base de contention.

2. Procédé de la revendication 1, dans lequel le message de réservation (320) est transmis pendant une durée qui est au moins aussi longue que la durée de transmission escomptée la plus longue d'un paquet dans la communication à base de contention.

3. Procédé de la revendication 1, dans lequel le message de réservation (320) est transmis à la puissance de transmission la plus élevée.

4. Procédé de la revendication 1, dans lequel le message de réservation (320) comprend un identifiant d'un dispositif transmettant le message de réservation (320) .

5. Procédé de la revendication 1, dans lequel le message de réservation (320) comprend un identifiant d'un système de transmission.

6. Procédé de la revendication 1, dans lequel le message de réservation (320) comprend un identifiant d'une règle de coexistence spectrale.

7. Procédé de la revendication 1, dans lequel le message de réservation (320) empêche un dispositif utilisant la communication à base de contention de faire une transmission.

8. Procédé de la revendication 1, dans lequel le message de réservation (320) est transmis uniquement s'il n'existe aucune transmission en cours par un dispositif utilisant la communication à base de contention.

9. Procédé pour une communication sans fil comprenant :
la détermination qu'une communication planifiée (330) est destinée à être lancée dans une bande de fréquences dans laquelle au moins un dispositif utilise une communication à base de contention ;
l'instruction donnée à un dispositif de transmettre un message de réservation (320), la transmission du message de réservation (320) provoquant une interférence sur l'au moins un dispositif à un niveau plus élevé qu'un seuil de contention de l'au moins un dispositif ; et
la transmission de la transmission planifiée (330) à la suite de la transmission du message de réservation (320) au sein d'un intervalle de temps plus court qu'un temps d'espacement des tentatives de la communication à base de contention.

10. Procédé de la revendication 9, dans lequel l'instruction inclut des informations au sujet de la durée du message de réservation (320).

11. Procédé de la revendication 9, dans lequel l'instruction comprend des informations au sujet d'une bande de fréquences sur laquelle le message de réservation (320) est destiné à être transmis.

12. Procédé de la revendication 9, dans lequel l'instruction comprend des informations au sujet d'une région géographique où le message de réservation (320) est destiné à être transmis.

13. Procédé de la revendication 9, dans lequel le dispositif reçoit une instruction uniquement si le dispositif a suffisamment de puissance de batterie pour durer pendant un temps prédéterminé.

14. Appareil, comprenant :
des moyens pour mettre en œuvre les étapes dans l'une quelconque des revendications de procédé 1 à 13.

15. Support lisible par ordinateur codé avec des instructions qui, lors de leur exécution par un ordinateur, réalisent un procédé pour une communication sans fil comprenant :
la détermination qu'une transmission planifiée (330) est destinée à être lancée dans une bande de fréquences dans laquelle au moins un dispositif utilise une communication à base de contention ;
l'instruction donnée à un dispositif de transmettre un message de réservation (320) dans la bande de fréquences, la transmission du message de réservation (320) provoquant une interférence sur l'au moins un dispositif à un niveau plus élevé qu'un seuil de contention de l'au moins un dispositif ; et
la transmission de la transmission planifiée (330) à la suite de la transmission du message de réservation (320) au sein d'un intervalle de temps plus court qu'un temps d'espacement des tentatives de la communication à base de contention.
